# EUROPÄISCHE PATENTSCHRIFT

(11) **EP 2 734 399 B1**
(45) Veröffentlichungstag und Bekanntmachung des Hinweises auf die Patenterteilung: **18.04.2018**
(21) Anmeldenummer: 12743407.4
(22) Anmeldetag: 04.07.2012
(51) Int. Cl.: B60L 3/00, B60L 3/04, B60L 11/12, B60L 11/14, B60L 7/14

(54) **VERFAHREN ZUM BETREIBEN EINES ELEKTRISCHEN NETZES UND VORRICHTUNG ZUM STEUERN EINES ELEKTRISCHEN NETZES**
METHOD FOR OPERATING AN ELECTRICAL NETWORK, AND APPARATUS FOR CONTROLLING AN ELECTRICAL NETWORK
PROCÉDÉ PERMETTANT DE FAIRE FONCTIONNER UN RÉSEAU ÉLECTRIQUE ET DISPOSITIF DE COMMANDE D'UN RÉSEAU ÉLECTRIQUE

(30) Priorität: 21.07.2011 DE 102011079566
(43) Veröffentlichungstag der Anmeldung: 28.05.2014
(73) Patentinhaber: Robert Bosch GmbH, 70442 Stuttgart (DE)
(72) Erfinder: WALD, Klaus-Juergen, 71263 Weil Der Stadt (DE); WIRTH, Martin, F-93404 Saint-Ouen Cedex (FR)
(86) Internationale Anmeldenummer: PCT/EP2012/062978
(87) Internationale Veröffentlichungsnummer: WO 2013/010790

(56) Entgegenhaltungen:
- EP-A1- 1 603 224
- EP-A1- 2 130 734
- EP-A2- 1 157 873

## Beschreibung

Die vorliegende Erfindung betrifft ein Verfahren zum Betreiben eines elektrischen Netzes, insbesondere eines Kraftfahrzeugs, wobei das elektrische Netz wenigstens einen elektrischen Energiespeicher, insbesondere einen elektrischen Hochspannungsenergiespeicher, und wenigstens zwei elektrische Maschinen, die über jeweils einen steuerbaren Wechselrichter mit dem elektrischen Netz verbunden sind, aufweist, wobei zur elektrischen Energieversorgung des Netzes ein geregelter Generatorbetrieb einer ersten der elektrischen Maschinen eingeleitet wird.

Ferner betrifft die vorliegende Erfindung eine Vorrichtung zum Steuern eines elektrischen Netzes, insbesondere eines Kraftfahrzeugs mit Spannungserfassungsmitteln zum Erfassen einer verfügbaren Spannung in dem Netz und einer Steuereinheit, die dazu ausgebildet ist, das oben beschriebene Verfahren auszuführen.

Schließlich betrifft die vorliegende Erfindung ein elektrisches Netz, insbesondere für ein Kraftfahrzeug mit einem elektrischen Energiespeicher, insbesondere einem elektrischen Hochspannungsenergiespeicher, und wenigstens zwei elektrischen Maschinen, die über jeweils einen steuerbaren Wechselrichter mit dem elektrischen Netz verbunden sind und mit einer Steuereinheit der oben genannten Art.

### Stand der Technik

Zum Betreiben eines elektrischen Netzwerkes in einem Hybrid-Kraftfahrzeug ist es bekannt, bei Erfassen einer Fehlfunktion eines elektrischen Energiespeichers, diesen von dem Netzwerk elektrisch zu trennen und die elektrische Maschine des Hybrid-Kraftfahrzeugs in einen Freilaufbetrieb zu schalten, um eine von der sich drehenden, mechanisch über den Antriebsstrang angetriebenen, elektrischen Maschine induzierte Freilaufspannung dem Netzwerk bereitzustellen, welche zur Reaktivierung der einer Spannungsregelung benutzt wird. Dabei wird der Freilaufbetrieb durch das Öffnen der Leistungsschalter des Wechselrichters eingeleitet und die von der permanentmagnetisch erregten elektrischen Maschine induzierte Freilaufspannung dem Netzwerk bereitgestellt. Ein derartiges Verfahren ist beispielsweise bekannt aus der WO 2009/083342.
Die induzierte Freilaufspannung einer elektrischen Maschine ist abhängig von der Drehzahl der elektrischen Maschine. Bei sehr hohen Drehzahlen oder sehr niedrigen Drehzahlen der elektrischen Maschine ist es möglich, dass die induzierte Freilaufspannung außerhalb eines zulässigen Bereiches ist. Ist die Spannung zu niedrig, so kann die Spannung in dem Netzwerk nicht geregelt werden. Ist die Spannung zu hoch, so können durch Überspannungen Bauteile geschädigt werden.

Die Druckschrift EP1157873 wird als nächstliegender Stand der Technik angesehen und offenbart die Merkmale der Präambel des unabhängigen Anspruchs 1.

### Offenbarung der Erfindung

Vor diesem Hintergrund wird erfindungsgemäß ein Verfahren der eingangs genannten Art zum Betreiben eines elektrischen Netzes, insbesondere eines Kraftfahrzeugs, bereitgestellt.
In Abhängigkeit einer zu erwartenden induzierten Freilaufspannungshöhe einer der elektrischen Maschinen, wird eine der elektrischen Maschinen im Freilauf betrieben, sodass in dem elektrischen Netz eine Freilaufspannung zur Verfügung steht, bevor ein geregelter Generatorbetrieb einer ersten der elektrischen Maschinen eingeleitet wird. Das Verfahren hierzu umfasst folgende Schritte: In einem ersten Schritt wird das Unterschreiten eines ersten vorgebbaren Spannungswertes der in dem elektrischen Netz verfügbaren elektrischen Spannung erfasst. Anschließend wird in einem zweiten Schritt in Abhängigkeit einer zu erwartenden induzierten Freilaufspannungshöhe einer der elektrischen Maschinen einer der Wechselrichter ausgewählt, der einer elektrischen Maschine zugeordnet ist. Der ausgewählte Wechselrichter wird so angesteuert, dass die daran angeschlossene elektrische Maschine im elektrischen Freilauf betrieben wird. Aufgrund ihrer Drehung induziert die elektrische Maschine eine Freilaufspannung, welche im elektrischen Netz anliegt. In einem anschließenden dritten Schritt wird das Überschreiten eines zweiten vorgebbaren Spannungswertes der in dem elektrischen Netz verfügbaren induzierten elektrischen Freilaufspannung erfasst. Anschließend wird in einem vierten Schritt der Wechselrichter der ersten elektrischen Maschine so angesteuert, dass die daran angeschlossene erste elektrische Maschine generatorisch betrieben wird.

Ferner wird erfindungsgemäß eine Vorrichtung bereitgestellt, die dazu ausgebildet ist, das oben beschriebene Verfahren auszuführen.

Schließlich wird erfindungsgemäß ein elektrisches Netz, insbesondere für ein Kraftfahrzeug, bereitgestellt mit einer Vorrichtung der oben beschriebenen Art.

Unter einem geregelten Generatorbetrieb wird vorliegend ein Betrieb der elektrischen Maschine verstanden, bei dem die Leistungsschalter des zugeordneten Wechselrichters aktiv, wechselweise, insbesondere pulsweitenmoduliert, angesteuert werden, um eine induzierte, regelbare Generatorspannung dem elektrischen Netz bereitzustellen.

Mittels des Freilaufbetriebes einer elektrischen Maschine wird eine Freilaufspannung induziert und in dem elektrischen Netz bereitgestellt. Zum Betrieb einer der elektrischen Maschinen im Freilaufbetrieb werden die Leistungsschalter des dazugehörigen Wechselrichters geöffnet. Somit wird die Freilaufspannung induziert und liegt im elektrischen Netz an. Diese Freilaufspannung dient dazu, in dem elektrischen Netz eine ausreichend hohe Spannung bereitzustellen, welche ein Einleiten des geregelten Generatorbetriebs ermöglicht. Der vorgebbare zweite Spannungswert wird so gewählt, dass er der Spannungshöhe entspricht, die für ein Einleiten des geregelten Generatorbetriebs notwendig ist.

Erfindungsgemäß wird zum Bereitstellen der ausreichend hohen Spannung im elektrischen Netz die Freilaufspannung einer der mindestens zwei elektrischen Maschinen genutzt. Diese elektrische Maschine kann beispielsweise ein Zusatzantrieb sein, der mit einer anderen Drehzahl dreht als eine andere elektrische Maschine. Dieser Zusatzantrieb kann beispielsweise dem Antrieb des Fahrzeugs dienen oder dem Antrieb anderer Komponenten im Fahrzeug, zum Beispiel als Antrieb eines Klimakompressors oder einer Ölpumpe. Die mindestens zwei elektrischen Maschinen würden also im Freilaufbetrieb unterschiedliche Freilaufspannungen erzeugen. Mit anderen Worten kann erfindungsgemäß nicht nur eine elektrische Maschine dazu verwendet werden, die induzierte Freilaufspannung dem elektrischen Netz bereitzustellen. Sondern es sind mindestens zwei elektrische Maschinen verfügbar. Somit kann eine ausreichend hohe Freilaufspannung, die Vorraussetzung für die Einleitung des geregelten Generatorbetriebes ist, insbesondere auch eines Notlaufbetriebes, zuverlässiger bereitgestellt werden.

Das Erfassen des Unterschreitens oder Überschreitens eines vorgebbaren Spannungswertes erfolgt mittels bekannter Methoden zur Spannungsmessung. Sobald die Spannungsmessung einen Spannungswert erfasst, der einen vorgebbaren Spannungswert unterschreitet bzw. überschreitet, wird ein Unterschreiten oder Überschreiten eines Spannungswertes erfasst. Diese Erfassung und Weiterverarbeitung dieser Information sowie die Steuerung des Verfahrens und der Wechselrichter erfolgt mittels dazu geeigneter Mittel, insbesondere durch ein Steuergerät oder eine Steuerelektronik.

### Vorteile der Erfindung

Durch die vorliegende Erfindung kann ein Generatorbetrieb mit einer höheren Zuverlässigkeit eingeleitet werden, da bei Vorhandensein mehrerer elektrischer Maschinen diejenige zur Erzeugung der Freilaufspannung ausgewählt wird, deren zu erwartende Freilaufspannung geeignet ist, den geregelten Generatorbetrieb einzuleiten. Wenn nur eine elektrische Maschine zur Verfügung steht, gibt es viele Betriebssituationen, bei denen die mit der einen elektrischen Maschine erzeugbare Freilaufspannung entweder zu gering ist, da die elektrische Maschine beispielsweise stillsteht oder die erzeugbare Freilaufspannung zu hoch ist, da sich die elektrische Maschine mit einer zu hohen Drehzahl dreht.

Bevorzugt wird das erfindungsgemäße Verfahren bei einem Abtrennen des elektrischen Energiespeichers von dem elektrischen Netz während des Betriebes des Fahrzeugs eingesetzt. Unter "während des Betriebes des Fahrzeugs" wird der bestimmungsgemäße Betrieb eines Fahrzeugs verstanden, also insbesondere während einer Fahrt von Ort A nach Ort B mit unterschiedlichen Geschwindigkeiten und relativ kurzen Stillständen, zum Beispiel an Kreuzungen oder im Stau. Insbesondere die Durchführung von Diagnose und Reparaturen am Fahrzeug in der Werkstatt wird nicht unter "während des Betriebes des Fahrzeuges" verstanden.

Bei der Trennung des elektrischen Energiespeichers, also insbesondere der Hochvoltbatterie, von dem elektrischen Netz, fällt die in dem elektrischen Netz verfügbare elektrische Spannung in kurzer Zeit unter einen Mindestwert. Ein geregelter Generatorbetrieb ist dann nicht mehr möglich. Der Unterschied zwischen dem Istwert und dem Sollwert der Spannungsregelung ist dann zu groß. Je nach Auslegung der Regelstrecke wird die Regelung instabil. Es können Spannungsspitzen auftreten, die die Leistungselektronik zerstören. Der erfindungsgemäße erste vorgebbare Spannungswert wird so vorgegeben, dass er dem genannten Mindestwert entspricht.

Wenn die anschließend in dem elektrischen Netz anliegende Freilaufspannung einer der elektrischen Maschinen den zweiten vorgebbaren Spannungswert überschreitet, steuert der Wechselrichter der ersten elektrischen Maschine die daran angeschlossene erste elektrische Maschine generatorisch an. Aufgrund ihrer Drehung wird nun eine Generatorspannung induziert, welche im elektrischen Netz anliegt. Bevorzugt wird diese Generatorspannung mittels einer Spannungsregelung geregelt. Die Spannungsregelung für das elektrische Netz wird gemäß bekannter Methoden mittels geeigneter Mittel und dem Steuergerät ausgeführt. Aus dem gesteuerten Freilaufbetrieb wird somit in einen geregelten Generatorbetrieb umgeschaltet, wodurch eine vorgebbare Generatorspannung dem elektrischen Netz zur Verfügung gestellt wird.

Es ist weiterhin bevorzugt, wenn die erste elektrische Maschen mit einer Kurbelwelle einer Verbrennungskraftmaschine des Kraftfahrzeugs verbunden ist und während des Generatorbetriebes von der Verbrennungskraftmaschine angetrieben wird. Mindestens eine weitere elektrische Maschine ist mit einer anderen Achse, einer anderen Fahrzeugkomponente oder über eine Übersetzung direkt oder indirekt mit einem Rad des Kraftfahrzeugs verbunden. Dadurch weisen die mindestens zwei elektrischen Maschinen im wesentlichen unterschiedliche Drehzahlen während des Betriebes des Fahrzeuges auf, so dass in einem Freilaufbetrieb unterschiedliche elektrische Freilaufspannungen induziert und dem elektrischen Netz zur Verfügung gestellt werden können.

Es ist weiterhin bevorzugt, wenn die mindestens zwei elektrischen Maschinen mit unterschiedlichen Drehzahlen betrieben werden.

Dadurch werden im Freilaufbetrieb unterschiedliche Freilaufspannungen induziert, so dass zur Einleitung eines Notlaufbetriebes oder Generatorbetriebes je nach jeweiliger Drehzahl eine optimale Freilaufspannung dem elektrischen Netz zur Verfügung gestellt werden kann.

Es ist weiterhin von Vorzug, wenn die mindestens zwei elektrischen Maschinen unterschiedliche Freilaufkennlinien aufweisen.

Dadurch können auch bei identischen Drehzahlen unterschiedliche Freilaufspannungen induziert und dem elektrischen Netz bereitgestellt werden.

Es ist weiterhin bevorzugt, eine zu erwartende induzierte Freilaufspannung einer elektrischen Maschine auf der Grundlage ihrer Drehzahl und ihrer Freilaufkennlinie zu bestimmen.

Weiter bevorzugt ist es, die elektrische Maschine für den Freilaufbetrieb auszuwählen, deren zu erwartende induzierte Freilaufspannung die geringste Abweichung von einem vorgegebenen Generatorspannungssollwert aufweist.

Dadurch kann der Freilaufspannungswert dem elektrischen Netz zur Verfügung gestellt werden, der die geringste Abweichung von einem vorgegebenen Generatorspannungssollwert aufweist. Somit können Spannungssprünge und Spannungsspitzen bei der Wiederaufnahme der Spannungsregelung im elektrischen Netz reduziert werden.

Es ist weiterhin bevorzugt, wenn diejenige elektrische Maschine nicht in dem Freilaufbetrieb betrieben wird, deren zu erwartende induzierte Freilaufspannung außerhalb eines zulässigen Spannungsbereichs liegt. Dadurch wird verhindert, dass eine Freilaufspannung dem elektrischen Netz zur Verfügung gestellt wird, die zu gering ist, um einen sicheren geregelten Generatorbetrieb einzuleiten, oder zu hoch ist und dadurch empfindliche Bauteile schädigt.

Bevorzugt wird der der erste und der zweite vorgebbare Spannungswert gleich groß vorgegeben. Somit lässt sich das Verfahren einfacher umsetzen. Ein Computerprogramm zur Umsetzung des Verfahrens benötigt in diesem Fall weniger Ressourcen.

Es ist allgemein bevorzugt, wenn der gesteuerte Generatorbetrieb der ersten elektrischen Maschine mittels eines Pulsweitenmodulationsverfahrens durchgeführt wird. Somit wird ein verlustarmer und optimierter Generatorbetrieb zur Erzeugung einer vorgebbaren Generatorspannung durchgeführt werden.

Es ist allgemein bevorzugt, wenn eine elektrische Maschine als permanentmagnetisch erregte Synchronmaschine ausgebildet ist. Dadurch kann durch Umschalten in den Freilauf ohne elektrische Energieversorgung eine elektrische Freilaufspannung induziert werden.

Es versteht sich, dass die Merkmale, Eigenschaften und Vorteile der erfindungsgemäßen Steuereinheit auch entsprechend auf das erfindungsgemäße Verfahren zutreffen bzw. anwendbar sind und umgekehrt.

### Kurze Beschreibung der Zeichnungen

Fig. 1 zeigt in schematischer Form ein Kraftfahrzeug mit einem Hybrid-Antriebsstrang und einer zusätzlichen elektrischen Maschine zum Antreiben des Kraftfahrzeugs; und
Fig. 2 zeigt in schematischer Form ein Ablaufdiagramm eines Verfahrens zum Betreiben eines elektrischen Netzes.

### Ausführungsformen der Erfindung

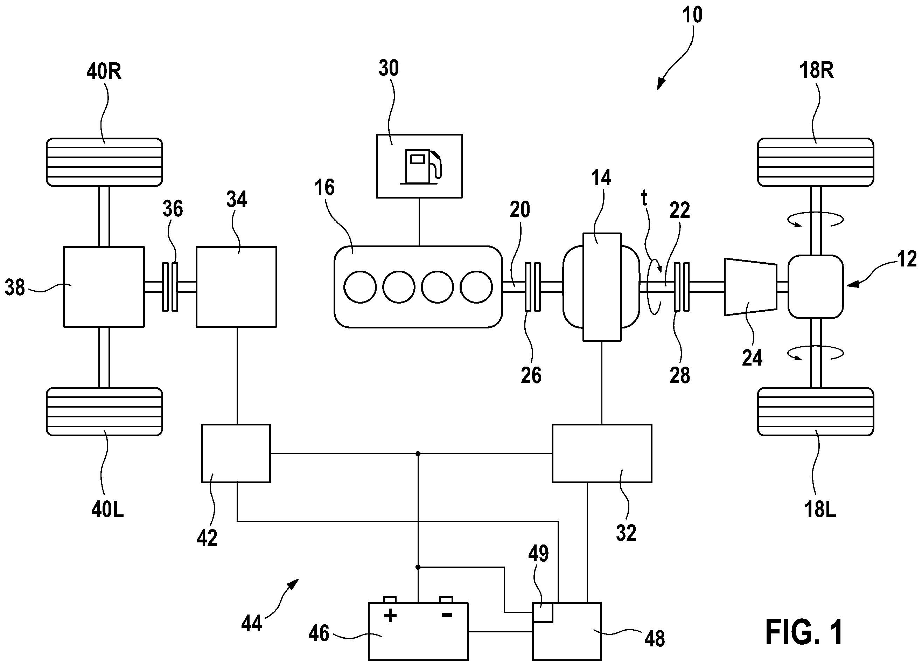

In Fig. 1 ist ein Kraftfahrzeug schematisch dargestellt und allgemein mit 10 bezeichnet. Das Kraftfahrzeug 10 weist einen Antriebsstrang 12 auf, der im vorliegenden Fall eine elektrische Maschine 14 und einen Verbrennungsmotor 16 zur Bereitstellung von Antriebsleistung beinhaltet. Der Antriebsstrang 12 dient zum Antreiben von angetriebenen Rädern 18L, 18R des Fahrzeugs 10.

Der Verbrennungsmotor 16 ist über eine Kurbelwelle 20 mit einer, insbesondere mit einer ersten, elektrischen Maschine 14 verbunden bzw. verbindbar. Der Verbrennungsmotor 16 und die elektrische Maschine 14 können an einer Abtriebswelle 22 ein Drehmoment t und eine einstellbare Drehzahl bereitstellen. Die Abtriebswelle 22 ist mit einer Getriebeeinheit 24 verbunden bzw. verbindbar, um das Drehmoment t auf die angetriebenen Räder 18R, 18L zu übertragen. Die Kurbelwelle 20 und die Abtriebswelle 22 weisen im vorliegenden Fall jeweils eine Kupplung 26, 28 auf, um den Verbrennungsmotor 16 mit der elektrischen Maschine 14 bzw. die elektrische Maschine 14 mit der Getriebeeinheit 24 zu verbinden.

Der Antriebsstrang 12 kann dazu eingerichtet sein, das Fahrzeug 10 alleine mittels der elektrischen Maschine 16 anzutreiben. Alternativ kann die elektrische Maschine 16 wie in dem vorliegenden Fall Teil eines Hybrid-Antriebsstrangs 12 sein.

Die Kurbelwelle 20 ist mittels der Kupplung 26 mit einem Rotor der elektrischen Maschine 14 verbunden bzw. verbindbar, um eine Drehzahl bzw. ein Drehmoment auf die elektrische Maschine 14 zu übertragen. Der Rotor der elektrischen Maschine 14 ist mit der Abtriebswelle 22 verbunden, um das Drehmoment t auf die Getriebeeinheit 24 zu übertragen. Das Drehmoment t wird dabei durch die Summe der von dem Verbrennungsmotor 16 und der elektrischen Maschine 14 bereitgestellten einzelnen Drehmomente gebildet.

Im motorischen Betrieb erzeugt die elektrische Maschine 14 ein Antriebsmoment, das den Verbrennungsmotor 16, zum Beispiel in einer Beschleunigungsphase, unterstützt.
Im generatorischen bzw. Rekuperationsbetrieb wird die elektrische Maschine 14 durch die mit den Rädern 18R, 18L des Fahrzeugs verbundene, sich drehende Abtriebswelle 22 angetrieben und erzeugt elektrische Energie, die im Allgemeinen dem Fahrzeug 10 zur Verfügung gestellt wird.

Der Verbrennungsmotor 16 wird durch einen Kraftstofftank 30 mit Kraftstoff versorgt.

Die elektrische Maschine 14 kann zwei- oder mehrphasig ausgebildet sein und wird mittels einer Leistungselektronik 32 bzw. eines Inverters 32 oder Pulswechselrichters 32 angesteuert und mit elektrischer Energie versorgt.

Das Kraftfahrzeug 10 weist ferner eine weitere, insbesondere eine zweite, elektrische Maschine 34 auf, die über eine Kupplung 36 und ein Getriebe 38 mit Rädern 40R, 40L des Fahrzeugs 10 verbindbar ist. Die elektrische Maschine 34 dient dazu, zusätzliche Antriebsleistung zum Antreiben der Räder 40R, 40L bereitzustellen. Weiterhin dient die elektrische Maschine 34 dazu, im generatorischen bzw. Rekuperationsbetrieb, wenn die sich drehenden Räder 40R, 40L die elektrische Maschine 34 antreiben, Energie zu erzeugen und dem Fahrzeug 10 im Allgemeinen zur Verfügung zu stellen.

Die elektrische Maschine 34 kann zwei- oder mehrphasig ausgebildet sein. Mittels einer Leistungselektronik 42 bzw. eines Inverters 42 oder Pulswechselrichters 42 wird sie gesteuert und mit dem elektrischen Netz verbunden. Die elektrischen Maschinen 14, 34 sind vorzugsweise als permanentmagnetisch erregte Synchronmaschinen ausgebildet.

Die Inverter 32, 42 sind über ein elektrisches Netz 44, insbesondere ein Hochspannungsnetz 44, mit einer Energieversorgungseinheit 46 wie z.B. einer Gleichspannungsversorgung (z.B. Akkumulator, Batterie bzw. Hochspannungsbatterie) 46 des Fahrzeugs 10 verbunden. Die Inverter 32, 42 und die Energieversorgungseinheit 46 und das elektrische Netz 44 sind mit einem Steuergerät 48 oder einer Steuerelektronik 48 verbunden, das/die dazu ausgebildet ist, die im elektrischen Netz 44 anliegende Spannung zu regeln, insbesondere die gesamte Energieversorgung der elektrischen Maschinen 14, 34, den Ladezustand der Energieversorgungseinheit 46 und das elektrische Netz 44 zu steuern und zu überwachen. Dem Steuergerät 48 und der darin enthaltenen Spannungsregelung 48 ist dazu insbesondere ein Spannungsmessgerät 49 zugeordnet. Die Zuordnung der einzelnen hier genannten elektronischen Funktionen des Steuergerätes 48 können auf unterschiedliche Steuereinheiten des Antriebstrangs, zum Beispiel den Invertern 32, 42, beliebig verteilt sein.

Das Kraftfahrzeug 10 weist insbesondere ein in Fig. 1 nicht dargestelltes Niederspannungsnetz mit einer separaten Batterie auf, um Steuergeräte des Kraftfahrzeugs 10 mit einer Niederspannung zu versorgen. Insbesondere die Energieversorgung des Steuergerätes 48 und die Ansteuerung der Leistungsschalter der Inverter 32, 42 beispielsweise für den Freilaufbetrieb sowie für den Generatorbetrieb erfolgt durch das Niederspannungsnetz. Vorzugsweise sind dabei das elektrische Netz 44 und das Niederspannungsnetz mittels eines Gleichspannungswandlers zum Austausch von elektrischer Energie verbunden.

Die elektrischen Maschinen 14, 34 können beide separat in einem Generatorbetrieb oder Rekuperationsbetrieb generatorisch betrieben werden. Dabei erzeugen die elektrischen Maschinen eine Generatorspannung, die über die jeweiligen Inverter 32, 42 spannungsgeregelt in das elektrische Netz 44 eingespeist wird. Diese elektrische Energie wird somit anderen Verbrauchern des Kraftfahrzeugs 10 bereitgestellt und/oder zum Laden der Energieversorgungseinheit 46 verwendet.

Um die elektrischen Maschinen 14, 34 im geregelten Generatorbetrieb zu betreiben, werden die elektrischen Maschinen 14, 34 vorzugsweise über die Inverter 32, 42 auf eine bestimmte Weise, insbesondere pulsweitenmoduliert, angesteuert.

Die Inverter 32, 42 weisen zur entsprechenden Ansteuerung der elektrischen Maschinen 14, 34 eine Mehrzahl von Leistungsschaltern auf, die in einer Mehrzahl von Halbbrücken zusammengeschaltet sind. Mittels dieser Leistungsschalter werden die elektrischen Maschinen 14, 34 sowohl im motorischen als auch im generatorischen Betrieb gesteuert.

Sofern die elektrische Energieversorgungseinheit 46 von dem elektrischen Netz 44 elektrisch entkoppelt ist, versucht das Steuergerät 48 einen Generatorbetrieb einer ersten elektrischen Maschine 14 aufrechtzuerhalten oder wieder einzuleiten, um die geregelte elektrische Energieversorgung des elektrischen Netzes 44 zu gewährleisten. Sofern die erste elektrische Maschine 14 bereits beim Abtrennen der Energieversorgungseinheit 46 generatorisch betrieben wurde, ist die Weiterführung des geregelten Generatorbetriebes möglich. Falls keine der Maschinen 14, 34 beim Abtrennen der Energieversorgungseinheit 46 generatorisch betrieben wurde, fällt die Spannung im elektrischen Netz 44 sehr rasch ab. Wenn Verbraucher, beispielsweise elektrische Maschinen 14, 34 oder der DC/DC Wandler zur Versorgung des Niederspannungsnetzes am elektrischen Netz 44 angeschlossen sind, so kann die Spannung innerhalb weniger Millisekunden auf 0 Volt absinken. Eine Aufnahme des geregelten Generatorbetriebs einer elektrischen Maschine bei einer Netzspannung von nur wenigen Volt ist nicht möglich. Aufgrund der großen Abweichungen des Ist- vom Sollwert der Spannungsregelung würde die Regelung instabil. Große Spannungssprünge und Spannungsspitzen wären die Folge und würden die Leistungselektronik zerstören. Unterschreitet die Spannung im elektrischen Netz 44 einen ersten vorgebbaren Spannungswert, so wird erfindungsgemäß in Abhängigkeit einer zu erwartenden induzierten Freilaufspannung einer der elektrischen Maschinen14, 32 einer der dazugehörigen Wechselrichter 32, 42 ausgewählt. Der ausgewählte Wechselrichter 32, 42 wird so angesteuert, dass die daran angeschlossene elektrische Maschine 14, 34 im elektrischen Freilauf betrieben wird und aufgrund ihrer Drehung eine Freilaufspannung induziert wird. Diese Freilaufspannung liegt im elektrischen Netz 44 an. Im Freilauf einer elektrischen Maschine werden alle Leistungsschalter geöffnet, so dass die durch die entsprechende elektrische Maschine 14, 34 induzierte elektrische Spannung über Freilaufdioden, die in den Invertern 32, 42 den Leistungsschaltern parallel geschaltet sind, gleichgerichtet und entsprechend in das elektrische Netz 44 eingespeist wird.

Überschreitet die nun in dem elektrischen Netz 44 anliegende Freilaufspannung den zweiten vorgebbaren Spannungswert, so wird der Wechselrichter 32 der ersten elektrischen Maschine 14 so angesteuert, dass die daran angeschlossene erste elektrische Maschine 14 generatorisch betrieben wird. Die durch die Verbrennungskraftmaschine angetriebene Maschine 14 induziert nun aufgrund ihrer Drehung eine Generatorspannung, welche im elektrischen Netz 44 anliegt und mittels einer Spannungsregelung 48 regelbar ist. Aus dem ungesteuerten Freilaufbetrieb wird somit in einen geregelten Generatorbetrieb umgeschaltet, wodurch eine vorgebbare Generatorspannung dem elektrischen Netz 44 zur Verfügung gestellt wird. Die Spannungsregelung 48 für das elektrische Netz wird dazu gemäß bekannten Methoden mittels geeigneter Mittel und dem Steuergerät 48 ausgeführt.

Üblicherweise ist die notwendige Mindestspannung im Netz 44 zum Einleiten und Betreiben der Leistungsschalter der Inverter 32, 42 für einen geregelten Generatorbetrieb etwa 70 V.

Da die elektrischen Maschinen 14, 34 durch die vorzugsweise unterschiedlichen zwischengeschalteten Getriebe 24, 38 unterschiedliche Drehzahlen aufweisen und vorzugsweise unterschiedliche Freilaufkennlinien aufweisen, also unterschiedliche Freilaufspannungen im Freilaufbetrieb bei gleichen Raddrehzahlen des Fahrzeuges bereitstellen, kann diejenige der beiden elektrischen Maschinen 14, 34 für den Freilaufbetrieb ausgewählt werden, die eine elektrische Freilaufspannung induziert, deren Abweichung von einem vorgegebenen Generatorspannungssollwert am geringsten ist.

Sofern das Kraftfahrzeug 10 mehr als zwei elektrische Maschinen 14, 34 aufweist, z.B. als Radnabenantriebe oder andere Zusatzantriebe, kann das Steuergerät 48 auf der Grundlage der gemessenen jeweiligen Drehzahl und der Freilaufkennlinie eine der elektrischen Maschinen 14, 34 auswählen, die eine elektrische Freilaufspannung induziert, deren Abweichung von einem vorgegebenen Generatorspannungssollwert am geringsten ist. Dabei wird diejenige elektrische Maschine 14, 34 ausgewählt, die eine elektrische Freilaufspannung innerhalb eines vordefinierten Spannungsbereichs induziert.

Insgesamt kann somit bei einer Abtrennung des elektrischen Energiespeichers 46 von dem elektrischen Netz 44 die weitere geregelte elektrische Energieversorgung des Kraftfahrzeugs 10 gewährleistet werden.

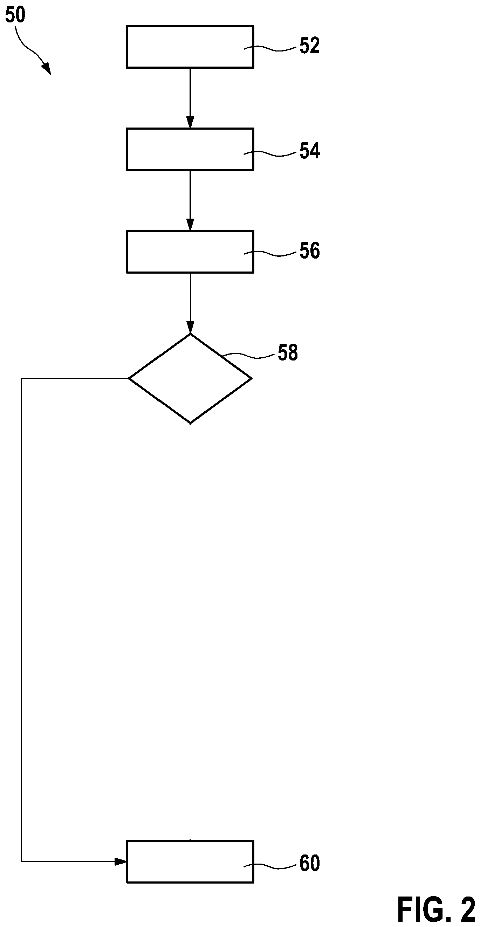

In Fig. 2 ist ein Ablaufdiagramm eines Verfahrens zum Betreiben eines elektrischen Netzes schematisch dargestellt und allgemein mit 50 bezeichnet.

Das Verfahren 50 wird beispielsweise eingeleitet durch eine Abtrennung des elektrischen Energiespeichers 46 von dem elektrischen Netz 44 während des Betriebes des Fahrzeuges, wie es bei 52 gezeigt ist. Anschließend wird bei 54 erfindungsgemäß das Unterschreiten eines ersten vorgebbaren Spannungswertes im elektrischen Netz 44 erfasst. Daraufhin wird bei 56 in Abhängigkeit einer zu erwartenden induzierten Freilaufspannung einer der elektrischen Maschinen 14, 32 einer der dazugehörigen Wechselrichter 32, 42 ausgewählt und der ausgewählte Wechselrichter 32, 42 so angesteuert, dass die daran angeschlossene elektrische Maschine 14, 34 im elektrischen Freilauf betrieben wird. Aufgrund ihrer Drehung wird eine Freilaufspannung induziert, welche im elektrischen Netz 44 anliegt.

Bei 58 wird überprüft, ob die nun in dem elektrischen Netz 44 anliegende Freilaufspannung den zweiten vorgebbaren Spannungswert überschreitet. Sofern der zweite vorgebbaren Spannungswert überschritten wird, wird bei 60 der geregelte Generatorbetrieb der ersten elektrischen Maschine 14 eingeleitet. Hierzu wird der Wechselrichter 32 der ersten elektrischen Maschine 14 so angesteuert, dass die daran angeschlossene erste elektrische Maschine 14 generatorisch betrieben wird. Aufgrund ihrer Drehung wird eine Generatorspannung induziert, welche im elektrischen Netz 44 anliegt und welche mittels der Spannungsregelung 48 regelbar ist.

## Patentansprüche

1. Verfahren (50) zum Betreiben eines elektrischen Netzes (44) eines Kraftfahrzeugs (10), wobei das elektrische Netz (44) einen elektrischen Energiespeicher (46), zwei elektrische Maschinen (14,34), die über jeweils einen steuerbaren Wechselrichter (32, 42) mit dem elektrischen Netz (44) verbunden und separat in einem Generatorbetrieb oder Rekuperationsbetrieb betrieben werden können, und ein Steuergerät (48) aufweist, das dazu ausgebildet ist, die im elektrischen Netz (44) anliegende Spannung zu regeln und die gesamte Energieversorgung der elektrischen maschinen (14,34), den Ladezustand des elektrischen Energiespeichers (46) und das elektrische Netz (44) zu steuern, **dadurch gekennzeichnet,**, das Verfahren durch eine Abtrennung des elektrischen Energiespeichers (46) von dem elektrischen Netz (44) während des Betriebs des Fahrzeugs eingeleitet wird, dass die elektrischen Maschinen (14,34) bei gleichen Raddrehzahlen des Kraftfahrzeugs unterschiedliche induzierte Freilaufspannungen im Freilaufbetrieb aufweisen, und dass bei einem Unterschreiten eines ersten vorgebbaren Spannungswertes durch die in dem elektrischen Netz (44) verfügbare elektrische Spannung ein geregelter Generatorbetrieb einer ersten der elektrischen Maschinen (14, 34) eingeleitet wird (60), indem in Abhängigkeit einer der zu erwartenden induzierten Freilaufspannungen einer der elektrischen Maschinen (14, 32) einer der dazugehörigen Wechselrichter (32, 42) ausgewählt und so angesteuert wird, dass die daran angeschlossene elektrische Maschine (14, 34) im elektrischen Freilauf betrieben wird, so dass diese aufgrund ihrer Drehung eine Freilaufspannung induziert, welche im elektrischen Netz (44) anliegt, wobei im Freilauf der an den ausgewählten Wechselrichter (32,42) angeschlossenen elektrischen Maschine (14,34) alle Leistungsschalter geöffnet werden, sodass die durch die elektrische Maschine (14,34) induzierte elektrische Spannung über Freilaufdioden, die im ausgewählten Wechselrichter (32,42) den Leistungsschaltern parallel geschaltet sind, gleichgerichtet und entsprechend in das elektrische Netz (44) eingespeist sind, und anschließend überprüft, ob die nun in dem elektrischen Netz (44) anliegende, induzierte Freilaufspannung einen zweiten vorgebbaren Spannungswert überschreitet, und beim Überschreiten des zweiten vorgebbaren Spannungswertes durch die in dem elektrischen Netz (44) verfügbare induzierte elektrische Freilaufspannung der Wechselrichter (32 ,42) der ersten elektrischen Maschine (14, 34) so angesteuert wird, dass die daran angeschlossene erste elektrische Maschine (14, 34) im geregelten Generatorbetrieb betrieben wird, aufgrund ihrer Drehung eine Generatorspannung induziert, welche im elektrischen Netz (44) anliegt und die weitere geregelte Energieversorgung des Kraftfahrzeugs (10) gewährleistet.

2. Verfahren nach Anspruch 1, **dadurch gekennzeichnet, dass** das elektrische Netz (44) einen elektrischen Hochspannungsenergiespeicher (46), aufweist, und dass der geregelte Generatorbetrieb der ersten elektrischen Maschine (14, 34) während des Betriebes des Fahrzeuges nach Abtrennung (54) des elektrischen Hochspannungsenergiespeichers (46) von dem elektrischen Netz (44) zur weiteren elektrischen Energieversorgung des elektrischen Netzes (44), eingeleitet wird.

3. Verfahren nach Anspruch 1 oder 2, **dadurch gekennzeichnet, dass** das elektrische Netz (44) weiter eine Spannungsregelung (48) aufweist, mittels der beim geregelten Generatorbetrieb der ersten elektrischen Maschine (14, 34) die induzierte Generatorspannung im elektrischen Netz(44) regelbar ist.

4. Verfahren nach einem der Ansprüche 1 bis 3, **dadurch gekennzeichnet, dass** die erste elektrische Maschine (14) mit einer Kurbelwelle (20) einer Verbrennungskraftmaschine (16) des Kraftfahrzeugs (10) verbunden ist und die mindestens eine weitere elektrische Maschine (34) mit einer Achse oder einem Rad (40R, 40L) des Kraftfahrzeugs (10) verbunden ist.

5. Verfahren nach einem der Ansprüche 1 bis 4, **dadurch gekennzeichnet, dass** die erste elektrische Maschine (14) und die mindestens eine weitere elektrische Maschine (34) mit unterschiedlichen Drehzahlen betrieben werden.

6. Verfahren nach einem der Ansprüche 1 bis 5, **dadurch gekennzeichnet, dass** die erste elektrische Maschine (14) und die mindestens eine weitere elektrische Maschine (34) unterschiedliche Freilaufkennlinien aufweisen.

7. Verfahren nach einem der Ansprüche 1 bis 6, **dadurch gekennzeichnet, dass** die zu erwartende induzierte Freilaufspannung der jeweiligen elektrischen Maschine (14, 34) auf der Grundlage der jeweiligen Drehzahl und/oder der jeweiligen Freilaufkennlinie bestimmt wird.

8. Verfahren nach Anspruch 7, **dadurch gekennzeichnet, dass** der geregelte Generatorbetrieb der ersten elektrischen Maschine (14, 34) eingeleitet wird zur Erzeugung einer Generatorspannung im elektrischen Netz (44) mit einem vorgegebenen Generatorspannungssollwert, wobei diejenige elektrische Maschine (14, 34) zur Erzeugung der Freilaufspannung im elektrischen Netz (44) ausgewählt wird, deren zu erwartende induzierte Freilaufspannung die geringste Abweichung von einem vorgegebenen Generatorspannungssollwert aufweist.

9. Verfahren nach Anspruch 7 oder 8, **dadurch gekennzeichnet, dass** als elektrische Maschine (14, 34) zur Erzeugung der Freilaufspannung im elektrischen Netz (44) diejenige elektrische Maschine ausgeschlossen wird, deren zu erwartende induzierte Freilaufspannung außerhalb eines zulässigen Spannungsbereichs liegt.

10. Verfahren nach einem der Ansprüche 1 bis 9, **dadurch gekennzeichnet, dass** der geregelte Generatorbetrieb der ersten elektrischen Maschine mittels eines Pulsweitenmodulationsverfahrens durchgeführt wird.

11. Verfahren nach einem der Ansprüche 1 bis 10, **dadurch gekennzeichnet, dass** der erste und der zweite vorgebbare Spannungswert gleich groß sind.

12. Vorrichtung (48) zum Steuern eines elektrischen Netzes (44) eines Kraftfahrzeugs (10), umfassend Mittel zur Ausführung der Schritte des Verfahrens nach Ansprüchen 1-11 und mit Spannungserfassungsmitteln (49) zum Erfassen einer elektrischen Spannung in dem elektrischen Netz (44) und einer Steuereinheit (48), die dazu ausgebildet ist, das Verfahren (50) nach Anspruch 1 bis 11 auszuführen.

13. Elektrisches Netz (44) für ein Kraftfahrzeug (10), umfassend Mittel zur Ausführung der Schritte des Verfahrens nach Ansprüchen 1-11 und mit einem elektrischen Hochspannungsenergiespeicher (46), und wenigstens zwei elektrischen Maschinen (14, 34), die über jeweils einen steuerbaren Wechselrichter (32, 42) mit dem elektrischen Netz (44) verbunden sind, und mit einer Vorrichtung (48) nach Anspruch 12.

## Claims

1. Method (50) for operating an electrical system (44) of a motor vehicle (10), wherein the electrical system (44) has an electrical energy store (46), two electrical machines (14, 34) which can be connected to the electrical system (44) by means of a controllable inverter (32, 42) in each case and can be operated separately in a generator mode or recuperation mode, and has a controller (48) which is designed to regulate the voltage which is applied to the electrical system (44) and to control the total energy supply to the electrical machines (14, 34), the state of charge of the electrical energy store (46) and the electrical system (44), **characterized in that** the method is initiated by disconnecting the electrical energy store (46) from the electrical system (44) during operation of the vehicle, **in that** the electrical machines (14, 34) have different induced freewheeling voltages in the freewheeling mode at identical wheel rotation speeds of the motor vehicle, and **in that**, when a first predefinable voltage value is undershot by the electrical voltage which is available in the electrical system (44), a regulated generator mode of a first of the electrical machines (14, 34) is initiated (60), **in that**, depending on one of the expected induced freewheeling voltages of one of the electrical machines (14, 32), one of the associated inverters (32, 42) is selected and is actuated such that the electrical machine (14, 34) which is connected to it is operated in electrical freewheel mode, so that said electrical machine, as a result of its rotation, induces a freewheeling voltage which is applied to the electrical system (44), wherein all of the circuit breakers are open in the freewheel mode of the electrical machine (14, 34) which is connected to the selected inverter (32, 42), so that the electrical voltage which is induced by the electrical machine (14, 34) is rectified by means of freewheeling diodes, which are connected in parallel with the circuit breakers in the selected inverter (32, 42), and fed correspondingly into the electrical system (44), and a check is then made to determine whether the induced freewheeling voltage which is now applied to the electrical system (44) exceeds a second predefinable voltage value and, if the second predefinable voltage value is exceeded by the induced electrical freewheeling voltage which is available in the electrical system (44), the inverter (32, 42) of the first electrical machine (14, 34) is actuated such that the first electrical machine (14, 34) which is connected to it is operated in the regulated generator mode, a generator voltage which is applied to the electrical system (44) and which ensures the further regulated supply of energy to the motor vehicle (10) being induced as a result of the rotation of said first electrical machine.

2. Method according to Claim 1, **characterized in that** the electrical system (44) has an electrical high-voltage energy store (46), and **in that** the regulated generator mode of the first electrical machine (14, 34) is initiated during operation of the vehicle after disconnection (54) of the electrical high-voltage energy store (46) from the electrical system (44) for the further supply of electrical energy to the electrical system (44).

3. Method according to Claim 1 or 2, **characterized in that** the electrical system (44) further has a voltage regulation means (48) by means of which the induced generator voltage in the electrical system (44) can be regulated in the regulated generator mode of the first electrical machine (14, 34).

4. Method according to one of Claims 1 to 3, **characterized in that** the first electrical machine (14) is connected to a crankshaft (20) of an internal combustion engine (16) of the motor vehicle (10), and the at least one further electrical machine (34) is connected to an axle or to a wheel (40R, 40L) of the motor vehicle (10).

5. Method according to one of Claims 1 to 4, **characterized in that** the first electrical machine (14) and the at least one further electrical machine (34) are operated at different rotation speeds.

6. Method according to one of Claims 1 to 5, **characterized in that** the first electrical machine (14) and the at least one further electrical machine (34) have different freewheeling characteristic curves.

7. Method according to one of Claims 1 to 6, **characterized in that** the expected induced freewheeling voltage of the respective electrical machine (14, 34) is determined on the basis of the respective rotation speed and/or the respective freewheeling characteristic curve.

8. Method according to Claim 7, **characterized in that** the regulated generator mode of the first electrical machine (14, 34) is initiated for generating a generator voltage in the electrical system (44) with a predefined generator voltage setpoint value, wherein the electrical machine (14, 34) selected for generating the freewheeling voltage in the electrical system (44) is that of which the expected induced freewheeling voltage deviates least from a predefined generator voltage setpoint value.

9. Method according to Claim 7 or 8, **characterized in that** that electrical machine of which the expected induced freewheeling voltage lies outside a permissible voltage range is precluded from being used as the electrical machine (14, 34) for generating the freewheeling voltage in the electrical system (44).

10. Method according to one of Claims 1 to 9, **characterized in that** the regulated generator mode of the first electrical machine is performed by means of a pulse-width-modulation method.

11. Method according to one of Claims 1 to 10, **characterized in that** the first and the second predefinable voltage values have the same magnitude.

12. Apparatus (48) for controlling an electrical system (44) of a motor vehicle (10), comprising means for executing the steps of the method according to Claims 1-11 and having voltage detection means (49) for detecting an electrical voltage in the electrical system (44), and a control unit (48) which is designed to execute the method (50) according to Claims 1 to 11.

13. Electrical system (44) for a motor vehicle (10), comprising means for executing the steps of the method according to Claims 1-11 and having an electrical high-voltage energy store (46), and at least two electrical machines (14, 34) which are connected to the electrical system (44) by means of a controllable inverter (32, 42) in each case, and having an apparatus (48) according to Claim 12.

## Revendications

1. Procédé (50) pour faire fonctionner un réseau électrique (44) d'un véhicule automobile (10), le réseau électrique (44) possédant un accumulateur d'énergie électrique (46), deux machines électriques (14, 34) qui sont reliées au réseau électrique (44) respectivement par le biais d'un onduleur (32, 42) commandable et qui peuvent fonctionner séparément dans un régime de générateur ou un régime de récupération, et un contrôleur (48), lequel est configuré pour réguler la tension présente dans le réseau électrique (44) et commander l'ensemble de l'alimentation en énergie des machines électriques (14, 34), l'état de charge de l'accumulateur d'énergie électrique (46) et le réseau électrique (44), caractérisé en ce le procédé est initié par une déconnexion de l'accumulateur d'énergie électrique (46) du réseau électrique (44) pendant le fonctionnement du véhicule, en ce que les machines électriques (14, 34), en présence de vitesses de rotation identiques des roues du véhicule automobile, présentent des tensions de roue libre induites différentes en régime de roue libre, et en ce que lorsque la tension électrique disponible dans le réseau électrique (44) devient inférieure à une première valeur de tension pouvant être prédéfinie, un régime de générateur régulé d'une première des machines électriques (14, 34) est initié (60) en sélectionnant l'un des onduleurs (32, 42) associés en fonction de l'une des tensions de roue libre induites à attendre de l'une des machines électriques (14, 32) et en le commandant de telle sorte que la machine électrique (14, 34) qui y est connectée fonctionne en roue libre électrique, de sorte que celle-ci induise, du fait de sa rotation, une tension de roue libre qui est présente dans le réseau électrique (44), tous les commutateurs de puissance étant ouverts dans le fonctionnement en roue libre de la machine électrique (14, 34) connectée à l'onduleur (32, 42) sélectionné, de sorte que la tension électrique induite par la machine électrique (14, 34) soit redressée par des diodes de roue libre qui sont branchées en parallèle des commutateurs de puissance dans l'onduleur (32, 42) sélectionné et injectée de manière correspondante dans le réseau électrique (44), et un contrôle étant ensuite effectué afin de vérifier si la tension de roue libre induite qui est maintenant présente dans le réseau électrique (44) dépasse une deuxième valeur de tension pouvant être prédéfinie, et en cas de dépassement de la deuxième valeur de tension pouvant être prédéfinie par la tension de roue libre électrique induite disponible dans le réseau électrique (44), l'onduleur (32, 42) de la première machine électrique (14, 34) est commandé de telle sorte que la première machine électrique (14, 34) qui y est connectée fonctionne dans le régime de générateur régulé, induit une tension de générateur du fait de sa rotation, laquelle est présente dans le réseau électrique (44), et garantit la continuité de l'alimentation en énergie régulée du véhicule automobile (10).

2. Procédé selon la revendication 1, **caractérisé en ce que** le réseau électrique (44) possède un accumulateur d'énergie à haute tension électrique (46), et **en ce que** le régime de générateur régulé de la première machine électrique (14, 34) pendant le fonctionnement du véhicule est initié après la déconnexion (54) de l'accumulateur d'énergie à haute tension électrique (46) du réseau électrique (44) en vue de la continuité de l'alimentation en énergie électrique du réseau électrique (44).

3. Procédé selon la revendication 1 ou 2, **caractérisé en ce que** le réseau électrique (44) possède en outre un régulateur de tension (48) au moyen duquel la tension de générateur induite peut être régulée dans le réseau électrique (44) lors du régime de générateur régulé de la première machine électrique (14, 34).

4. Procédé selon l'une des revendications 1 à 3, **caractérisé en ce que** la première machine électrique (14) est reliée à un vilebrequin (20) d'un moteur à combustion interne (16) du véhicule automobile (10) et l'au moins une machine électrique supplémentaire (34) est reliée à un essieu ou une roue (40R, 40L) du véhicule automobile (10).

5. Procédé selon l'une des revendications 1 à 4, **caractérisé en ce que** la première machine électrique (14) et l'au moins une machine électrique supplémentaire (34) fonctionnent à des vitesses de rotation différentes.

6. Procédé selon l'une des revendications 1 à 5, **caractérisé en ce que** la première machine électrique (14) et l'au moins une machine électrique supplémentaire (34) possèdent des courbes caractéristiques de roue libre différentes.

7. Procédé selon l'une des revendications 1 à 6, **caractérisé en ce que** la tension de roue libre induite à attendre de la machine électrique (14, 34) respective est définie sur la base de la vitesse de rotation respective et/ou de la courbe caractéristique de roue libre respective.

8. Procédé selon la revendication 7, **caractérisé en ce que** le régime de générateur régulé de la première machine électrique (14, 34) est initié pour générer une tension de générateur dans le réseau électrique (44) avec une valeur de tension de consigne de générateur prédéfinie, la machine électrique (14, 34) sélectionnée pour générer la tension de roue libre dans le réseau électrique (44) étant celle dont la tension de roue libre induite à attendre présente le plus petit écart par rapport à une valeur de tension de consigne de générateur prédéfinie.

9. Procédé selon la revendication 7 ou 8, **caractérisé en ce que** la machine électrique (14, 34) qui est exclue de la génération de la tension de roue libre dans le réseau électrique (44) est celle dont la tension de roue libre induite à attendre se trouve en-dehors d'une plage de tensions autorisée.

10. Procédé selon l'une des revendications 1 à 9, **caractérisé en ce que** le régime de générateur régulé de la première machine électrique est mis en oeuvre au moyen d'un procédé de modulation d'impulsions en largeur.

11. Procédé selon l'une des revendications 1 à 10, **caractérisé en ce que** la première et la deuxième valeur de tension pouvant être prédéfinies sont identiques.

12. Dispositif (48) pour commander un réseau électrique (44) d'un véhicule automobile (10), comprenant des moyens pour exécuter les étapes du procédé selon les revendications 1 à 11 et comprenant des moyens d'acquisition de tension (49) destinés à acquérir une tension électrique dans le réseau électrique (44) et une unité de commande (48) qui est configurée pour mettre en oeuvre le procédé (50) selon les revendications 1 à 11.

13. Réseau électrique (44), pour un véhicule automobile (10), comprenant des moyens pour exécuter les étapes du procédé selon les revendications 1 à 11 et comprenant un accumulateur d'énergie à haute tension électrique (46) et au moins deux machines électriques (14, 34), qui sont reliées au réseau électrique (44) respectivement par le biais d'un onduleur (32, 42) commandable, et comprenant un dispositif (48) selon la revendication 12.
